# EUROPEAN PATENT APPLICATION

(11) **EP 4 651 466 A1**
(43) Date of publication of application: **19.11.2025**
(21) Application number: 24305739.5
(22) Date of filing: 13.05.2024
(51) Int. Cl.: H04L 65/65, H04L 41/50, H04L 41/5067, H04L 43/065, H04L 65/80

(54) **QUALITY OF EXPERIENCE METRICS REPORTING AND CONFIGURATION IN A SPLIT-RENDERING SYSTEM**

(71) Applicant: InterDigital CE Patent Holdings, SAS, 75017 Paris (FR)
(72) Inventor: GUDUMASU, Srinivas, MONTREAL, H3W 1K9 (CA); HAMZA, Ahmed, COQUITLAM, V3J 3X5 (CA); FONTAINE, Loic, 35530 NOYAL SUR VILAINE (FR); ONNO, Stephane, 35760 SAINT GREGOIRE (FR)
(74) Representative: Vossius & Partner Patentanwälte Rechtsanwälte mbB

(57) **Abstract**

Systems, methods, and instrumentalities are disclosed herein for a device that may receive metrics reporting configuration information, wherein the metrics reporting configuration information indicates at least a reporting scheme to be used by the SRC device for reporting split rendering metrics associated with a split-rendering session, a measurement resolution interval, and/or a reporting interval. The SRC device may receive a trigger indicating start of a metrics reporting session associated with a streaming session; measure a set of quality of experience (QoE) metrics associated with the streaming session, and/or send the set of QoE metrics to a metrics reporting server, where the QoE metrics are sent based on the reporting interval.

## Description

### Background

Video coding systems may be used to compress digital video signals, for example, to reduce the storage and/or transmission bandwidth associated with such signals. Video coding systems may include block-based, wavelet-based, and/or object-based systems. A block-based hybrid video coding system may be deployed.

### SUMMARY

A system of one or more computers may be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Systems and methods may be provided for configuration and reporting of quality of experience (QoE) related metrics by a split-rendering client (SRC). An SRC or an SRC device may receive a metrics reporting configuration information, where the metrics reporting configuration information indicates at least a reporting scheme to be used by the SRC device for reporting split rendering metrics associated with a split-rendering session, a measurement resolution interval, and/or a reporting interval. The SRC device may receive a trigger indicating start of a metrics reporting session associated with a streaming session. The SRC device may measure a set of QoE metrics associated with the streaming session. The set of QoE metrics may be measured for the measurement resolution interval. The set of QoE metrics may include at least one of a pose to render to photon metric, a render to photon metric, a round-trip interaction delay metric, a user interaction delay metric, an age of contents metric, a scene update delay metric, a metadata delay metric, or a data frames delay metric. The SRC client may send the set of QoE metrics to a metrics reporting server. The QoE metrics may be sent based on the reporting interval. Other embodiments of this aspect include corresponding computer systems, apparatus, and computer programs recorded on one or more computer storage devices, each configured to perform the actions of the methods.

In an example, an SRC device may include additional features such as the QoE metrics reporting configuration information may be received using one of a radio resource control (RRC) message, a QoE measurement collection (QMC) functionality, an M5 interface, or an open mobile alliance (OMA) device management (DM) configuration. In an example the set of metrics may include QoE metrics and latency metrics. In an example, a trigger may be received from a service access information object in a media access function session handling service and a metrics reporting configuration object in a media access function provisioning service. In an example, the trigger may be an open mobile alliance (OMA) device management (DM) QoE management object. In an example, the trigger may be received using QoE measurement collection (QMC) functionality. In an example the set of QoE metrics may be sent via a Metrics reporting API, an RRC message, or QoE measurement collection (QMC) functionality. In an example the set of QoE metrics may be sent via a hypertext transfer protocol (HTTP) POST request. The HTTP POST request may include the set of QoE metrics in XML format or JSON format.

In an example, the set of QoE metrics may be sent using QMC functionality. In an example the pose to render to photon metric may include at least a list of pose to render to photon delays measured during the measurement resolution interval. The render to photon metric may include at least a list of average render to photon delays measured during the measurement resolution interval. The round-trip interaction delay metric may include at least an average round trip interaction delay measured during the measurement resolution interval. The user interaction delay metric may include at least an average user interaction delays measured during the measurement resolution interval. The age of contents metric may include at least a list of age of content duration metrics measured during the measurement resolution interval. The scene update delay metric may include at least a list of scene update delays measured during the measurement resolution interval. The metadata delay metric may include at least a list of average metadata delays measured during the measurement resolution interval. The data frames delay metric may include at least a list of average data frame transmission delays measured during the measurement resolution interval. Implementations of the described techniques may include hardware, a method or process, or a computer tangible medium.

Each feature disclosed anywhere herein is described, and may be implemented, separately/individually and in any combination with any other feature disclosed herein and/or with any feature(s) disclosed elsewhere that may be impliedly or expressly referenced herein or may otherwise fall within the scope of the subject matter disclosed herein.

### BRIEF DESCRIPTION OF THE DRAWINGS

FIG. 1A is a system diagram illustrating an example communications system in which one or more disclosed examples may be implemented.
FIG. 1B is a system diagram illustrating an example wireless transmit/receive unit (WTRU) that may be used within the communications system illustrated in FIG. 1A.
FIG. 1C is a system diagram illustrating an example radio access network (RAN) and an example core network (CN) that may be used within the communications system illustrated in FIG. 1A.
FIG. 1D is a system diagram illustrating a further example RAN and a further example CN that may be used within the communications system illustrated in FIG. 1A.
FIG. 2 illustrates an example video encoder.
FIG. 3 illustrates an example video decoder.
FIG. 4 illustrates a block diagram of an example of a system in which various aspects and examples are implemented.
FIG. 5 illustrates an example of a 5G media streaming architecture.
FIG. 6 illustrates an example of a 5G media streaming general architecture.
FIG. 7 illustrates an example architecture for real-time media communication over a network.
FIG. 8 illustrates an example architecture for real-time media communication over a network.
FIG. 9 illustrates an example of an end-to-end split management architecture.

### DETAILED DESCRIPTION

A detailed description of illustrative examples will now be described with reference to the various Figures. Although this description provides a detailed example of possible implementations, it should be noted that the details are intended to be exemplary and in no way limit the scope of the application.

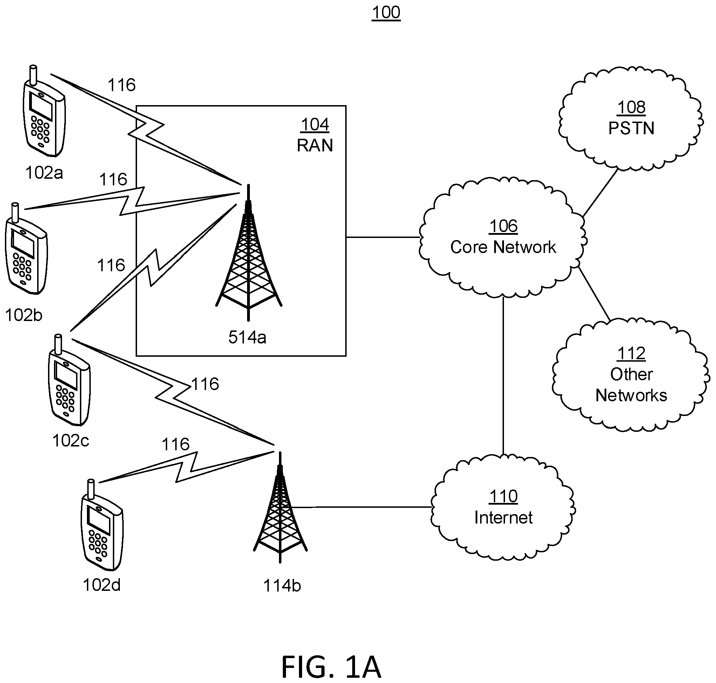

FIG. 1A is a diagram illustrating an example communications system 100 in which one or more disclosed examples may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed examples contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one example, the base station 114a may include three transceivers, i.e., one for each sector of the cell. In an example, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an example, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an example, the base station 114a and the WTRUs 102a, 102b, 102c may implement a radio technology such as NR Radio Access , which may establish the air interface 116 using New Radio (NR).

In an example, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In examples, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one example, the base station 114b and the WTRUs 102c, 102d may implement a radio technology such as IEEE 802.11 to establish a wireless local area network (WLAN). In an example, the base station 114b and the WTRUs 102c, 102d may implement a radio technology such as IEEE 802.15 to establish a wireless personal area network (WPAN). In yet another example, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/513 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

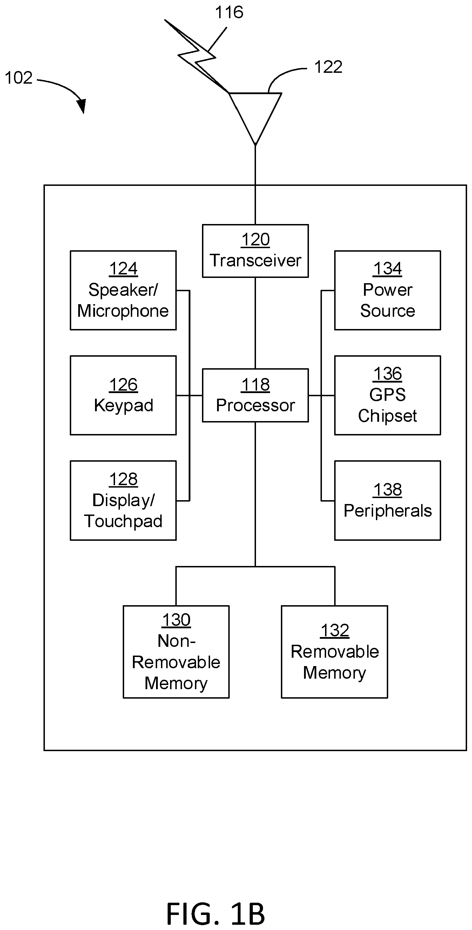

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one example, the transmit/receive element 122 may be an antenna configured to transmit and/or receive RF signals. In an example, the transmit/receive element 122 may be an emitter/detector configured to transmit and/or receive IR, UV, or visible light signals, for example. In yet another example, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one example, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other examples, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an example, the WTRU 102 may include a half-duplex radio for which transmission and reception of some or all of the signals (e.g., associated with particular subframes for either the UL (e.g., for transmission) or the downlink (e.g., for reception)).

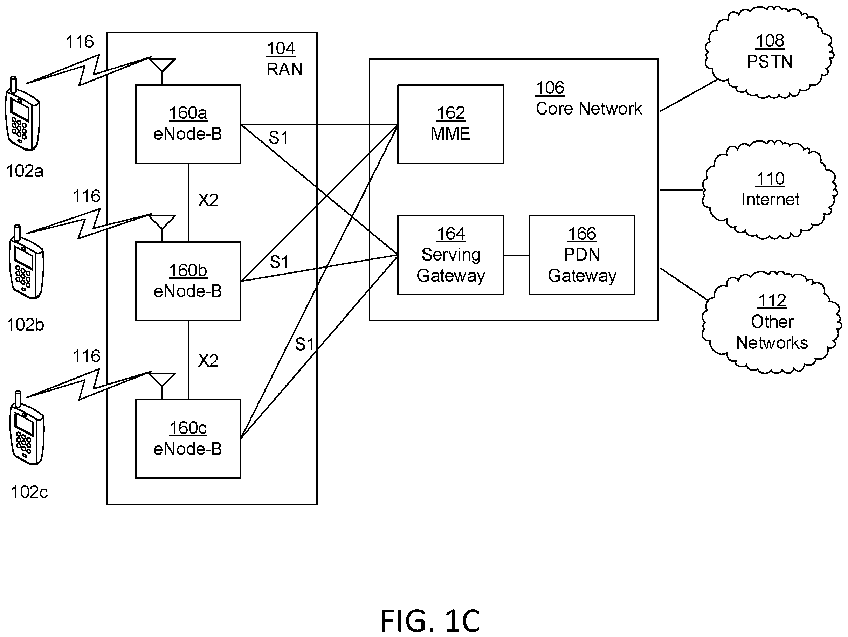

FIG. 1C is a system diagram illustrating the RAN 104 and the CN 106 according to an example. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an example. The eNode-Bs 160a, 160b, 160c may each include one or more transceivers for communicating with the WTRUs 102a, 102b, 102c over the air interface 116. In one example, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative examples that such a terminal may use (e.g., temporarily or permanently) wired communication interfaces with the communication network.

In representative examples, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative examples, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative examples, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative example, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

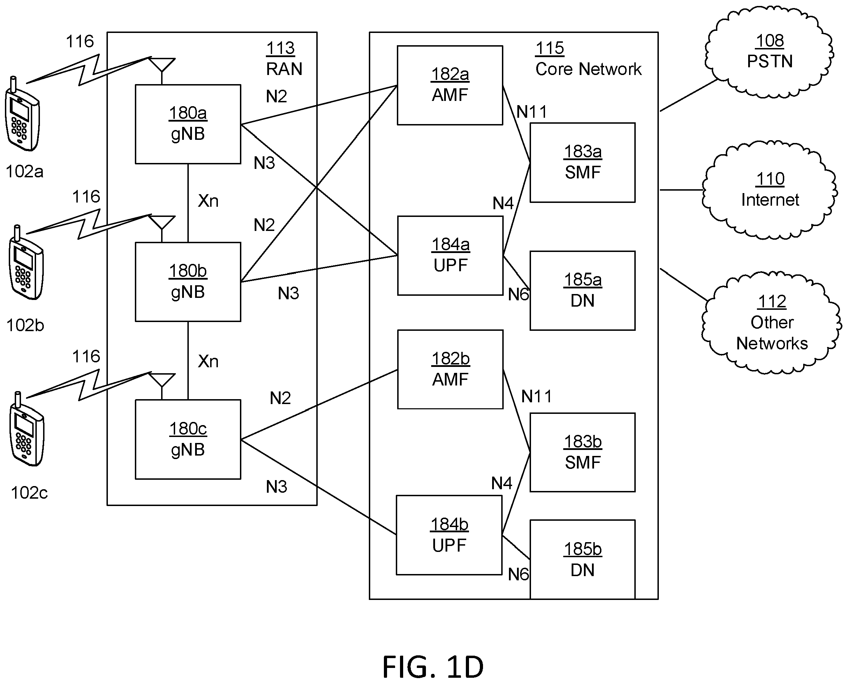

FIG. 1D is a system diagram illustrating the RAN 113 and the CN 115 according to an example. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an example. The gNBs 180a, 180b, 180c may each include one or more transceivers for communicating with the WTRUs 102a, 102b, 102c over the air interface 116. In one example, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an example, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an example, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 182a, 182b may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one example, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may perform testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. This is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

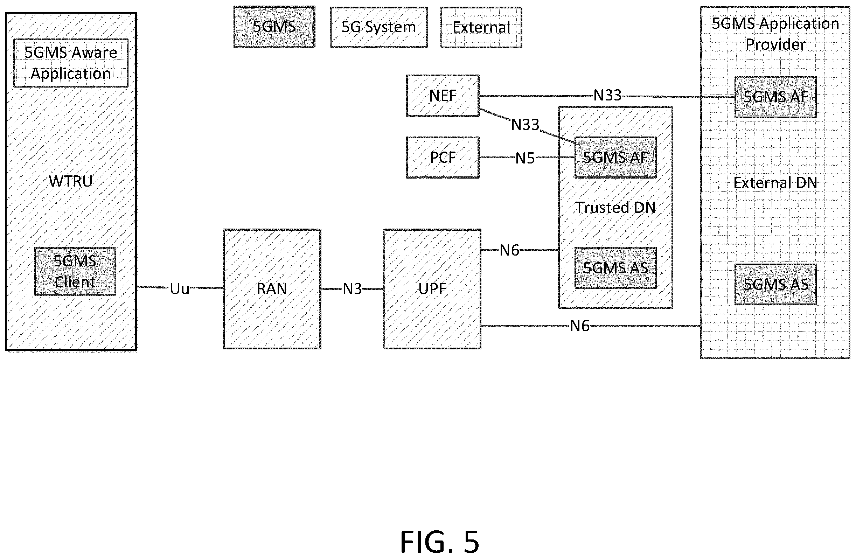

The aspects described and contemplated in this application can be implemented in many different forms. FIGs. 5-9 described herein may provide some examples, but other examples are contemplated and the discussion of FIGs. 5-9 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

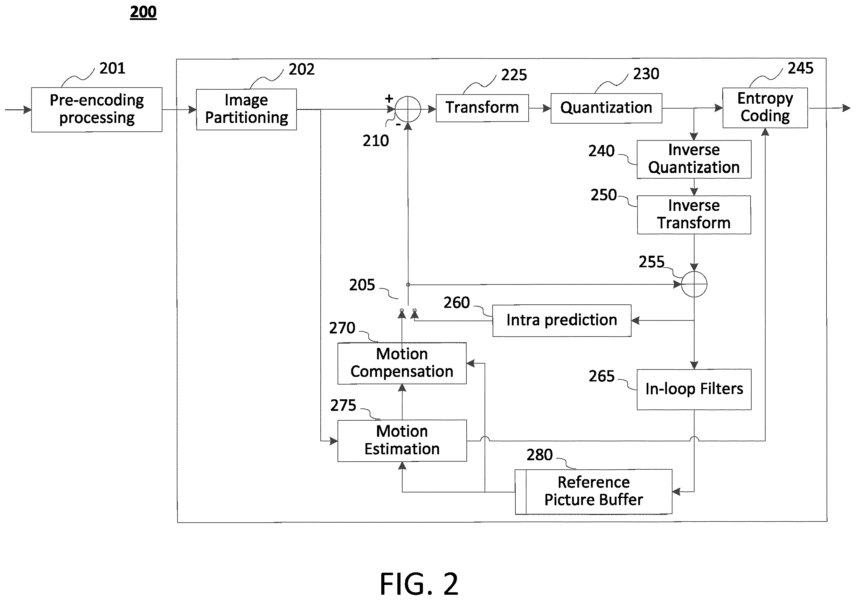

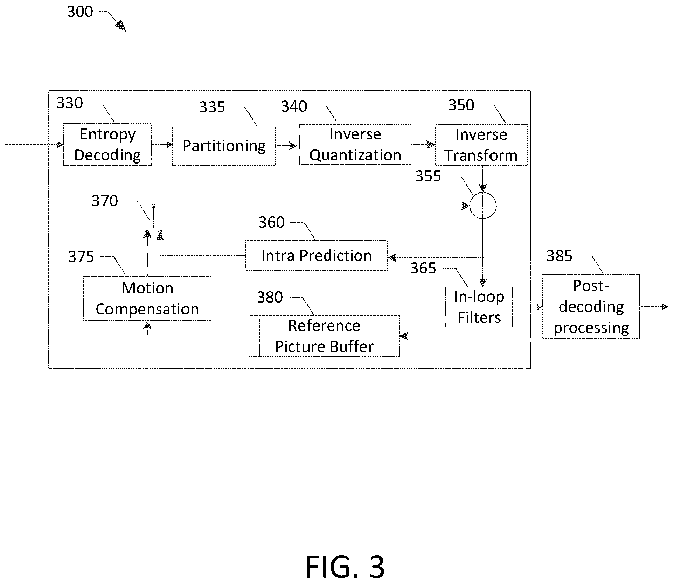

Various methods and other aspects described in this application can be used to modify modules, for example, decoding modules, of a video encoder 200 and decoder 300 as shown in FIG. 2 and FIG. 3. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, 16x16 region in a transform block, the CU size being at most 32 in width and/or height, min(width,height)<8, min(width,height)>4, the last signification position being at most 15, etc. The specific values are for example purposes and the aspects described are not limited to these specific values.

FIG. 2 illustrates an encoder 200. Variations of this encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 3. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

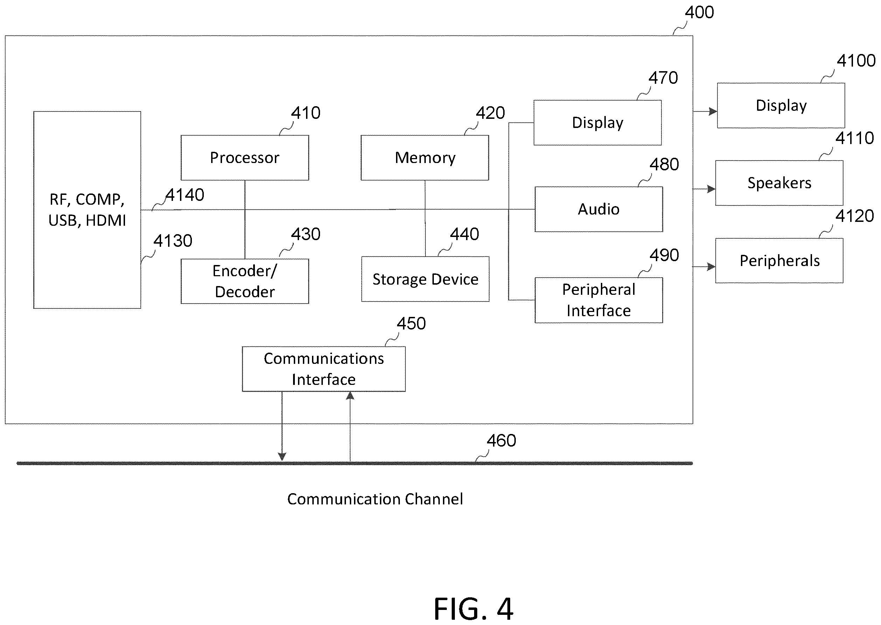

FIG. 4 illustrates a block diagram of an example of a system in which various aspects and examples are implemented. System 400 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, can be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that can be included in a device to perform the encoding and/or decoding functions. As is known, a device can include one or both of the encoding and decoding modules. Additionally, encoder/decoder module 430 can be implemented as a separate element of system 400 or can be incorporated within processor 410 as a combination of hardware and software as known to those skilled in the art.

Program code to be loaded onto processor 410 or encoder/decoder 430 to perform the various aspects described in this document can be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, a memory external to the processing device (for example, the processing device can be either the processor 410 or the encoder/decoder module 430) is used for one or more of these functions. The external memory can be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 can be provided through various input devices as indicated in block 4130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 4130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain examples, (iv) demodulating the downconverted and band-limited signal, (v) performing error correction, and (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, can be implemented, for example, within a separate input processing IC or within processor 410 as necessary. Similarly, aspects of USB or HDMI interface processing can be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 can be provided within an integrated housing, Within the integrated housing, the various elements can be interconnected and transmit data therebetween using suitable connection arrangement 4140, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 can be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 4130. Still other examples provide streamed data to the system 400 using the RF connection of the input block 4130. As indicated above, various examples provide data in a non-streaming manner. Additionally, various examples use wireless networks other than Wi-Fi, for example a cellular network or a Bluetooth network.

The system 400 can provide an output signal to various output devices, including a display 4100, speakers 4110, and other peripheral devices 4120. The display 4100 of various examples includes one or more of, for example, a touchscreen display, an organic light-emitting diode (OLED) display, a curved display, and/or a foldable display. The display 4100 can be for a television, a tablet, a laptop, a cell phone (mobile phone), or other device. The display 4100 can also be integrated with other components (for example, as in a smart phone), or separate (for example, an external monitor for a laptop). The other peripheral devices 4120 include, in various examples of examples, one or more of a stand-alone digital video disc (or digital versatile disc) (DVR, for both terms), a disk player, a stereo system, and/or a lighting system. Various examples use one or more peripheral devices 4120 that provide a function based on the output of the system 400. For example, a disk player performs the function of playing the output of the system 400.

In various examples, control signals are communicated between the system 400 and the display 4100, speakers 4110, or other peripheral devices 4120 using signaling such as AV.Link, Consumer Electronics Control (CEC), or other communications protocols that enable device-to-device control with or without user intervention. The output devices can be communicatively coupled to system 400 via dedicated connections through respective interfaces 470, 480, and 490. Alternatively, the output devices can be connected to system 400 using the communications channel 460 via the communications interface 450. The display 4100 and speakers 4110 can be integrated in a single unit with the other components of system 400 in an electronic device such as, for example, a television. In various examples, the display interface 470 includes a display driver, such as, for example, a timing controller (T Con) chip.

The display 4100 and speaker 4110 can alternatively be separate from one or more of the other components, for example, if the RF portion of input block 4130 is part of a separate set-top box. In various examples in which the display 4100 and speakers 4110 are external components, the output signal can be provided via dedicated output connections, including, for example, HDMI ports, USB ports, or COMP outputs.

The examples can be carried out by computer software implemented by the processor 410 or by hardware, or by a combination of hardware and software. As a non-limiting example, the examples can be implemented by one or more integrated circuits. The memory 420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 410 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Systems and methods may be provided for reporting and configuration of QoE metrics in a split-rendering system comprising at least a split-rendering client (SRC) and a split-rendering server (SRS). An example list of Quality of Experience (QoE) metrics that may be reported by a split-rendering client (SRC), a quality metrics reporting protocol, and/or a format are described herein. Systems and methods for transmitting QoE metrics reports using APIs and/or interfaces are described herein. Methods related to extending metrics reporting configuration resource(s) and/or using a quality reporting scheme for configuring an SRC to report metrics information to a metrics server may be provided.

QoE metrics that may be reported to a Metrics server (e.g., by a split-rendering client), an XML schema and/or a JSON schema for QoE metrics, a Quality metrics reporting protocol, a format for reporting QoE metrics (e.g., by an SRC), a use metrics reporting scheme (e.g., a 5G-RTC Quality metrics reporting scheme), extending a metrics element (e.g., in MetricsReportingConfiguration resource) for reporting collected metrics to a metrics server, and/or the like may be described herein.

Long Term Evolution (LTE), Fifth Generation New Radio (NR) (5GNR), and/or other recently developed communication technologies may allow wireless devices to operate (e.g., transmit information) at data rates that are orders of magnitude higher than those available just a few years ago (e.g., according to gigabits per second, etc.). Today's communication networks may be more secure, resistant to multipath fading, allow for lower latency in network traffic, and/or provide better communication efficiency (e.g., in terms of bits per second per unit bandwidth used, etc.). These and other recent improvements have led to the emergence of new methods of delivering media and content to mobile wireless devices, including broadcast, multicast, unicast and real-time media delivery technologies.

An architecture for 5G Media Streaming (5GMS) may be provided.

Streaming may include the delivery of time-continuous media as the predominant media. Streaming suggests that media is (e.g., predominantly) sent in a direction (e.g., only sent in a single direction) and consumed as it is received. Additionally, media content may be streamed as it is produced (e.g., live streaming and/or the like). On-demand streaming may refer to streamed content that is already produced.

FIG. 5 illustrates an example of a 5G media streaming architecture (e.g., the overall 5G media streaming architecture). In examples, a 5GMS Application Provider may use 5GMS for streaming services. A 5GMS application provider may provide a 5GMS aware-application on a WTRU to make use of 5GMS client and/or network functions (e.g., via interfaces and/or APIs defined in 5GMS).

An example architecture as illustrated in FIG. 5 may represent one or more 5GMS functions within a system (e.g., a 5G System (5GS)). In an example, multiple (e.g., at least three) functions may be provided. In examples, more and/or less than three functions may be provided. 5GMS AF may be an Application Function similar to that of a 5G Media Streaming standard. A 5GMS AS may be an Application Server dedicated to 5G Media Streaming. A 5GMS Client may include a WTRU internal function dedicated to 5G Media Streaming. In an example, a 5GMS Client may be a logical function. In examples, a 5GMS Client's subfunctions may be distributed within a WTRU according to implementation choice.

5GMS AF and/or 5GMS AS may include Data Network (DN) functions and/or may communicate with, for example, a WTRU (e.g., via N6).

In examples, functions in a trusted DN (e.g. a 5GMS AF in a Trusted DN) may be trusted by an operator's network as illustrated in FIG. 5. In examples, one or more AFs may communicate (e.g., directly communicate) with 5G Core functions (e.g., relevant 5G Core functions).

In examples, functions in external DNs (e.g. a 5GMS AF in an External DN) may communicate (e.g., only communicate) with 5G Core functions (e.g., via an NEF using N33).

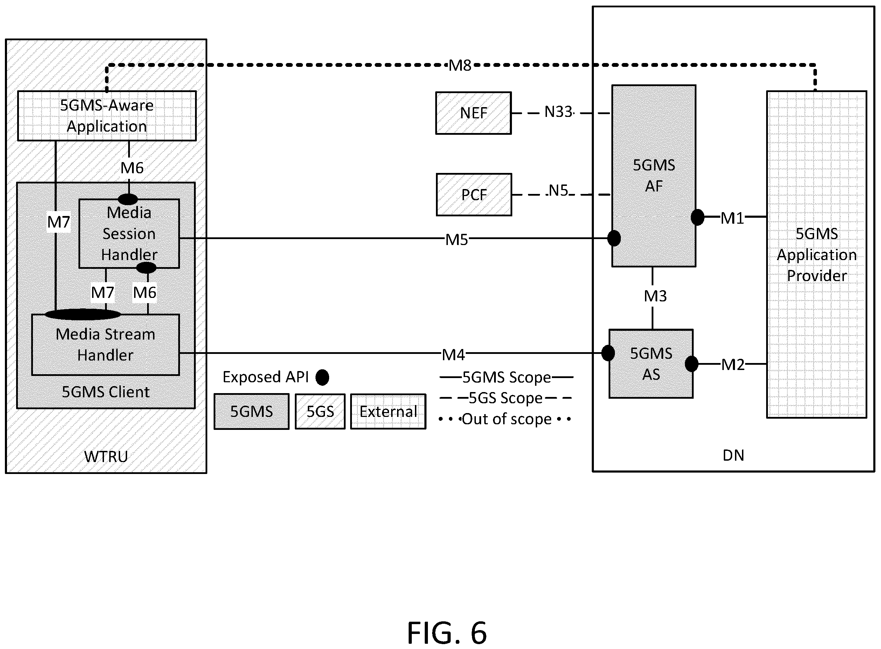

FIG. 6 illustrates an example of a 5G streaming general architecture. In an example, a 5G media services architecture may map the overall high level architecture as illustrated in FIG. 5 to an example 5G media streaming general architecture, as illustrated in FIG. 6.

With reference to FIG. 6, a 5GMS Client (e.g., in a WTRU) may include a Media Session Handler and/or a Media Stream Handler. The Media Session Handler and/or the Media Stream Handler may be functions (e.g., constituent functions). In examples, functions may expose APIs to one another in a similar and/or the same way that APIs are exposed to 5GMS-Aware Applications.

In an example, media streaming operation may include various (e.g., two) scenarios.. In an example, downlink streaming may include a scenario where the network may be an origin of media and/or a WTRU may act as a consumption device. In an example, uplink streaming may include a scenario where a WTRU may be the origin of media and/or a network may act as a consumption entity. Entities (e.g., functional entities) and/or interfaces of a media streaming architecture (e.g., general architecture) may be elaborated with specificities relating to downlink and uplink streaming in, for example, one or more specifications. A media AF may include an application function configured to execute a 5G Media Delivery function. A media AS may include an application server configured to execute a 5G Media Delivery function. A media Client may include a WTRU function (e.g., an internal function) configured to execute a 5G Media Delivery function. A WTRU may include a Media Session Handler that may communicate with a Media AF to establish, control, and/or support delivery of a media session.

A Media Access Function may be a WTRU's internal function. For example, a Media Access Function may be a function on a WTRU that communicates with a Media AS to access and/or deliver media content. In examples, a media access function may be subdivided (e.g., further sub-divided) into content delivery protocols, codecs, media types, metadata representations, and/or the like.

The following interfaces and/or APIs may be defined for 5G Media Delivery.

M1 (Provisioning API) may include an external API, exposed by a Media AF which enables a Media Application Provider to provision the usage of a 5G Media Delivery. An M 1 (Provisioning API) may additionally obtain feedback. M2 (User Plane interface) may include an external interface provided by a Media AS and/or used by a Media AS when/if the Media AS (e.g., in a trusted DN) exchanges media data with an application service provider. M3 (Server Configuration API) may include an API used to exchange information between a Media AF and/or a Media AS (e.g., for configuration purposes). M4 (Media Delivery Interface) may include an Interface and/or reference point between a media access function and/or a Media AS (e.g., in order to exchange media content). M5 (Session Handling API) may include APIs exposed by a Media AF to a Media Session Handler (e.g., for media session handling, control, reporting and/or assistance). In examples, a Session Handling API may include appropriate security mechanisms (e.g. authorization and/or authentication). M6 (Client Configuration APIs) may include APIs exposed by a Media Session Handler to an Application and/or media access function (e.g., for client-internal communication). M7 (Media Access APIs) may include APIs exposed by a Media Access function to configure and/or communicate with a Media access function. M8 (Application reference point) may include an application interface used for an information exchange (e.g., between a Media Application and/or a Media Application Provider).

One or more standards may provide procedures for downlink and/or media streaming using different 5G media streaming reference points. Additionally, one or more standards may provide procedures for uplink media streaming using 5GMS reference points.

An M1 interface provisioning procedure for Metrics reporting used by a 5GMS Application Provider (AP) to configure QoE metrics reporting associated with downlink and/or uplink media streaming may be provided. Systems and method may be provided for creating, reading, updating and/or destroying metrics report configurations.

An M5 API may be used by a Media Session Handler within a client (e.g., a 5GMS Client) to invoke services relating to downlink and/or uplink media streaming at the 5GMS AF. An M5 procedure for QoE metrics reporting may include a combination of provisioning metrics collection, and/or reporting metrics in a Media Session Handler using relevant Service Access Information. In examples, an M5 procedure may provide information for sending collected metrics by a Media Session Handler to a 5GMS AF (e.g., in accordance with a configured metrics scheme). In examples, a metrics scheme may be 3GPP-defined scheme and/or non-3GPP-defined scheme.

When a metrics collection and/or reporting feature is activated for a downlink media streaming session, one or more metrics configuration sets may be provided to the 5GMS Client. One or more metrics configuration sets (e.g., each metrics configuration set) may be associated with a metrics scheme. A given metrics configuration set may include information such as an 5GMS AF address to which metrics may be sent by a Media Session Handler, by a metrics reporting interval, by a target percentage of media streaming sessions for which reports may be sent, and/or by a set of metrics to be collected and/or reported.

For one or more streaming services (e.g. DASH streaming services), metrics in a metrics configuration set may be associated with a (e.g., 3GPP) metrics scheme. Metrics in a metrics configuration may be associated with one or more metrics as specified one or more specifications.

In examples, to send a metrics report, a Media Session Handler may send an HTTP POST message to an 5GMS AF.

In 5G media streaming, examples may include methods for supporting metric measurement, collection and/or reporting (e.g., in 5G system (5GS) networks). Details of APIs and procedures for such examples may be documented in technical specification 5G Media streaming protocols. Examples may be performed by a processor of an application function (AF) server (e.g., of the 5GS network). Examples may be performed by a media session handler running on a processor of a wireless device connected to a radio access network (RAN) of a system (5GS) network. Examples may include, for downlink 5G media streaming services, sending a metric configuration message to a wireless device via an application layer control plane (e.g., based M5d interface included in the 5GS network), wherein the metric configuration message indicates that the 5G media streaming service is associated with the 5G media streaming service. One or more metrics measurement, collection, and/or reporting requirements may be associated with a streaming service. Examples may include for uplink 5G media streaming services, sending a metric configuration message to a wireless device via an application layer control plane based M5u interface included in the 5GS network, wherein the metric configuration message indicates one or more metric measurements, collection, and/or reporting requirements associated with 5G media streaming.

Examples may include sending a metric configuration message to a wireless device via a control plane based M5 interface included in a 5GS network. A metric configuration message may indicate one or more metric measurements associated with a 5G media streaming service, collection, and/or reporting requirement.

Examples may include establishing a media session with a wireless device for a 5G media streaming service and/or receiving a metric report associated with the media session from the wireless device (e.g., via a control plane-based M5d interface). A metric report may include collected data with one or more of a metric measurement, a collection, and/or a reporting requirement associated with metrics. A media session may include processing a metric report to generate a processed metric report, and/or providing the processed metric report to an application server of a 5G media streaming service, an operation of the 5GS network, Administration and Maintenance (OAM) Servers, and/or a Third Party Server.

In examples, processing a metric report to generate a processed metric report may include filtering, aggregating, and/or reformatting collected metrics. In examples, processing a metric report to generate a processed metric report may include one or more rules that process metric reports to generate processed metric reports. (e.g., as instructed by an application server of the 5G media streaming service, an OAM server of the 5GS network, and/or a third-party server). In some aspects, one or more metric measurements, collection and/or reporting requirements may include QoE metrics associated with application and/or content services provided to a 5GS network from outside the 5GS network, and/or metrics requested from outside the 5GS network. In examples, a metric configuration message may indicate a metric scheme. In examples, a metric scheme may be set based on settings of a 5GS network and/or metric schemes (e.g., received from outside the 5GS network). In examples, a metric scheme may provide metric measurement, collection, and/or reporting rules and/or steps. In examples, one or more metric measurement, collection, and/or reporting requirements may include non-3rd Generation Partnership Protocol (non-3GPP) metrics. In examples, a 5G media streaming service may be an uplink 5G media streaming service and/or a downlink 5G media streaming service.

Examples may include receiving a metric configuration message from an AF server of a 5GS network (e.g., via an application layer control plane-based M5 interface). A metric configuration message may indicate one or more metrics measurements, collections, a collection associated with a 5G media streaming service, and/or reporting requirements.

Examples may include establishing a media session with the AF server for a 5G media streaming service. An M5 interface of a layer control plane may send metrics reports associated with a media session to an AF server. In response to establishing a media session, determining one or more metrics to collect for the media session based at least in part on one or more metric measurements. An AF server may determine collection and/or reporting requirements starting a media session, collect metrics from a media stream handler after a media session has started, and/or aggregate the collected metrics to generate metrics reports associated with the media session according to a metrics scheme.

Examples may include querying a wireless device's media stream handler selected for a media session to determine whether the media stream handler has the capability to measure and record a determined one or more metrics. In examples, a stream handler may not have the ability to measure and log a determined metric and/or metrics. A stream handler may send an error message to an AF server via an M5 interface based on an application layer control plane. In examples, a media session may be started, for example, in response to a determination that a media stream handler has a capability to measure and/or record one or more metrics.

An architecture for real-time media communication over 5G may be provided.

A Real-Time media Communication (RTC) (e.g., over a 5G system) may include delivering delay-sensitive media from one peer to another (e.g., with support of 5G network). In examples, an AR conversational service may be a use case (e.g., a typical use case) for RTC. In examples, an AR conversational service may enable an end-user to communicate media (e.g., directly communicate real-time media including AR/MR media contents).

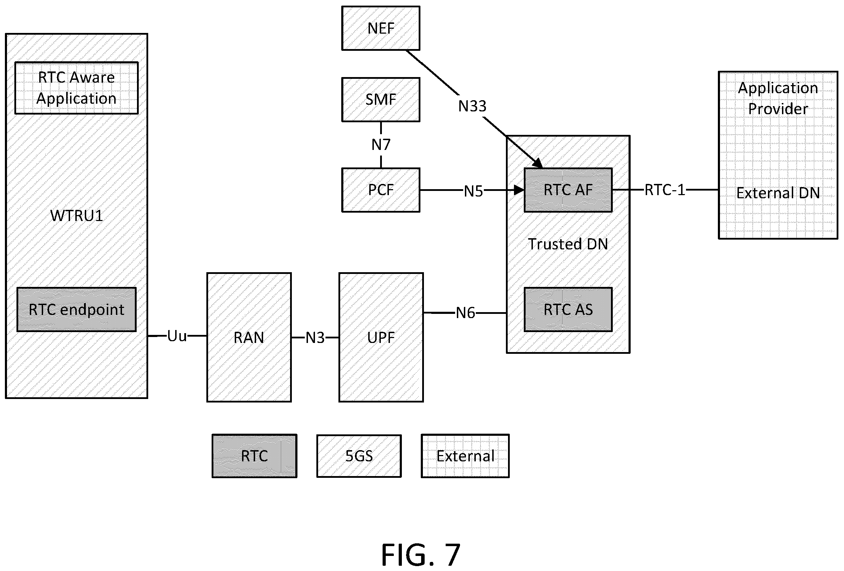

An example real-time media communication (RTC) architecture is shown in FIG. 7.

In examples, an RTC may be included in a system (e.g., a 5G System).

For example, features indicated by a dotted pattern may be included in one or more aspects of the present disclosure. Features indicated by a diagonal line pattern may include one or more systems (e.g., 5G Systems).

With reference to FIG. 7, media data may be exchanged between two or more RTC endpoints (e.g., over a 5G System). An RTC endpoint may be configured by an RTC architecture (e.g., as described herein). In examples, an RTC endpoint may be a WTRU, an edge computing server, and/or the like. An Application Provider may provide an RTC Aware-Application (e.g., located on a WTRU). An Application Provider may make use of an RTC endpoint and/or network functions using for example, interfaces and/or APIs. RTC architecture may provide one or more core functions and/or entities to support one or more services to a system (e.g., WebRTC-based service and/or the like over a 5G System). A trusted DN may include one or more functions (e.g., at least two main functions).

For example, an RTC AF (e.g., an RTC Application Function) may be similar and/or the same as a real-time media communication.

For example, an RTC AS (e.g., an Application Server) may be provided for real-time media communication.

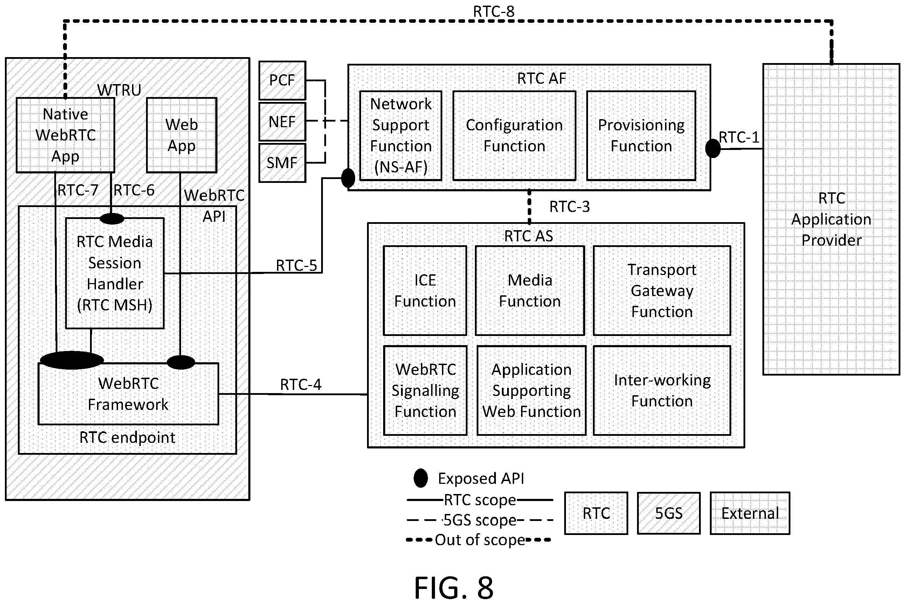

An example RTC architecture as illustrated in FIG. 8 may map to a system architecture (e.g., an overall high-level architecture as illustrated in FIG. 7). For example, FIG. 8 illustrates a portion (e.g., only a half portion) of the architecture of FIG. 7 (e.g., a link from an (e.g., one) RTC endpoint to an RTC AF and/or an RTC AS). In some examples, a remainder portion of an architecture may be the same and/or similar (e.g., symmetric to another portion of the architecture).

FIG. 8 illustrates an example of an RTC Architecture (e.g., an RTC General Architecture). Various features including RTC AF, an RTC AS, an RTC endpoint and/or the like, and/or interfaces may be provided, as illustrated in FIG. 8. An RTC architecture may include interfaces and/or functionalities (e.g., identified as stage-2 outcomes). An RTC may refer to bi-directional traffic (e.g., for which media is delivered in both directions). An RTC may be similar and/or the same as a 5GMS. In examples, media may be sent (e.g., predominantly sent) in a direction (e.g., only in a single direction) and/or consumed as the media is received. A media delivery framework may be provided for RTC interfaces and/or RTC functions.

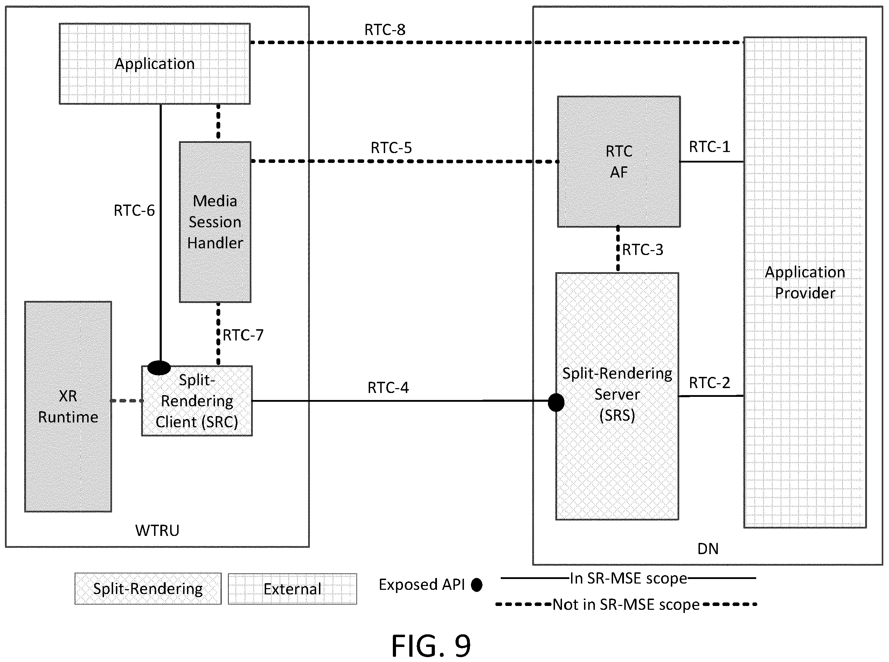

FIG. 9 illustrates an example architecture for a split-rendering media service enabler.

One or more variants of a reference architecture for a split rendering Media Service Enabler (MSE) may be provided. One or more variants (e.g., each) may represent a different perspective and/or different levels of detail.

One or more functions (e.g., of a split rendering MSE) may be provided herein (e.g., with reference to FIG. 9).

A Split-Rendering Client (SRC) may include a function for discovering WTRU media capabilities and/or for negotiating (e.g., communicating) with a Split-Rendering Server (SRS). An SRC may negotiate (e.g., communicate) with an SRS to determine a split-rendering process.

A Split-Rendering Server (SRS) may include a function for negotiation (e.g., communication) of an SR session (e.g., with an SRC), monitoring a server's edge resource usage, and/or managing (e.g., executing and/or running) a split rendering process.

A Media Application Function (AF) may include a function for provisioning (e.g., configuring), QoS allocation, and/or edge resource discovery.

A Media Application Provider may include a function for offering one or more services.

An application may be running (e.g., executed) on a WTRU.

A Media Session Handler (MSH) may be an entity on a WTRU. An MSH may provide communication (e.g., control plane communication) with an AF.

A split rendering client may include one or more components as described herein. A Media Access Function (MAF) may provide a fetching function and/or process media (e.g., a pre-rendered media) in preparation for display (e.g., final display). An MAF may provide, generate, and/or store (e.g., may provide for the carriage of) metadata (e.g., any metadata). In examples, an MAF may provide metadata to an SRC, generate metadata for an SRC, and/or store metadata in an SRC. In an example, the MAF may the carriage of metadata or local media to a split rendering server. A scene manager and/or a thin Presentation Engine function may provide a negotiation (e.g., a communication) of a split rendering session and/or a parsing of a description of rendered media (e.g., as provided by an SRS). A scene manager and/or a thin Presentation Engine may be responsible for setting up (e.g., initializing) and/or managing an XR session with an XR runtime. An XR source management function may be provided for gathering timed metadata (e.g., pose and/or action information). An XR source management function may send timed metadata to an SRS.

Example latency metrics may be provided.

Motion-to-photon and/or pose-to-render-to-photon latencies may be monitored based on an XR experience.

In addition to the sense or presence and/or immersiveness, an age of content and/or user interaction delay may be provided (e.g., of the uttermost importance) for immersive and/or non-immersive interactive experiences. In examples, an age of content and/or user interaction delay may be provided for experiences for which a user interaction with a scene impacts the content of scene (e.g., online gaming, and/or the like).

An example of latency metrics may be provided with reference to Table 1.

**Table 1: Example Latency metrics**

| **Latency metric** | **Description** |
|---|---|
| poseToRenderToPhoton | The time duration, in units of milliseconds, between the time to provide the pose information from the XR runtime to the renderer (the renderer uses this pose to generate the rendered frame) and the display time of the rendered frame. |
| | It can be computed as follows: |
| | actualDisplayTime - estimatedAtTime |
| renderToPhoton | The time duration, in units of milliseconds, between the start of the rendering by the Presentation Engine and the display time of the rendered frame. |
| | It can be computed as follows: |
| | actualDisplayTime - startToRenderAtTime (NOTE 1) |
| roundtripInteractionDelay | The time duration, in units of milliseconds, between the time a user action is initiated and the time the action is presented to the user. |
| | It can be computed as follows: |
| | actualDisplayTime - lastChangeTime |
| userlnteractionDelay | The time duration, in units of milliseconds, between the time a user action is initiated and the time the action is taken into account by the content creation engine in the scene manager. |
| | It can be computed as follows: |
| | sceneUpdateTime - lastChangeTime (NOTE 1) |
| ageOfContent | The time duration, in units of milliseconds, between the time the content is created in the scene by the Scene Manager and the time it is presented to the user. |
| | It can be computed as follows: |
| | actualDisplayTime - sceneUpdateTime (NOTE 1) |
| sceneUpdateDelay | The time duration, in units of milliseconds, spent by the Scene Manager to update the scene graph. |
| | It can be computed as follows: |
| | startToRenderAtTime - sceneUpdateTime |
| metadataDelay | The time duration, in units of milliseconds, between the time the split rendering metadata message is sent from the split rendering client and the time the split rendering server start to render using that metadata. |
| | It can be computed as follows: |
| | startToRenderAtTime - sendingAtTime |
| dataFrameDelay | The time duration, in units of milliseconds, spent to transmit the media rendered frame from the split rendering server to the split rendering client. |
| | It can be computed as follows: |
| | receptionTime - serverTransmitTime |

In examples, for a latency metrics computation, timing information may be converted to a single time format (e.g., wall clock time).

Media delivery interactions, APIs for provisioning, and/or media session handling may be provided based on one or more procedures, one or more APIs for metrics measurements, and/or collection and reporting (e.g., in a 5G system network for 5GMS and/or RTC services).

QoE metrics may be used for split-rendering services. QoE metrics may provide a MetricsReportingConfiguration resource for configuring metrics collection and reporting procedures (e.g., for a real-time media delivery provisioning session). A metrics reporting provisioning API may enable an application provider to configure metrics collection and reporting procedures (e.g., for a real-time media delivery session) and/or provide a quality reporting scheme (e.g., for configuring a WTRU to send a QoE metrics reports and quality reporting protocol for reporting the QoE metrics from the WTRU to a metrics server).

One or more QoE metrics to be provided to a metric server by a split-rendering client (SRC) WTRU and/or an endpoint may be described herein. A QoE metrics reporting protocol (e.g., for sending latency metrics from a SRC/WTRU to a metrics collection server) may be described herein. An extension of metrics reporting configuration resource(s) and/or a quality reporting scheme (e.g., for configuring an SRS to measure and report the QoE metrics) may be described herein.

A QoE for Spilt-Rendering Media Service Enabler (SR-MSE) client may be provided.

A split-rendering client (SRC) may support configuration and/or reporting of QoE, as described herein. In an example, a split-rendering client may report QoE metrics based on (e.g., according to) a QoE configuration. QoE reporting may be optional. In examples, if/when an SRC reports QoE metrics and/or latency metrics, an SRC may report one or more metrics (e.g., all requested metrics).

A quality metrics for SR-MSE split-rendering service media streaming may be provided herein. In examples, for quality metrics for SR-MSE split-rendering service media streaming, QoE reporting may be triggered using an Open Mobile Alliance device management (OMA-DM) QoE management object. Additionally and/or alternatively, QoE reporting may be triggered by QMC functionality. In examples, when QoE reporting is triggered (e.g., using any of the mechanisms described herein), an SRC may (e.g., is expected to) collect quality metrics based on (e.g., according to) a QoE configuration. When/if using an OMA-DM and/or a QMC functionality, a quality reporting scheme as described herein may be used.

A QoE configuration may be evaluated (e.g., only be evaluated) by a client (e.g., at the start of a QoE measurement and reporting session). The QoE configuration evaluation may be associated with a streaming session. A QoE configuration may be evaluated based on filtering (e.g., any filtering criteria such as by geographical area). Client evaluation of measurement and reporting criteria (e.g., all measurement and reporting criteria) for an QoE session may be unaffected by an (e.g., any) QoE configuration changes received during the QoE session (e.g., any changes to the QoE configuration may only affect QoE sessions started after these configuration changes have been received).

A quality metric reporting protocol may be provided herein. A quality metric reporting protocol may be used when/if QoE reporting is triggered (e.g., via the OMA-DM QoE management object). When/if QoE reporting is triggered (e.g., via the QMC functionality), QoE configuration may be received via an RRC message (e.g., a specific RRC message) for UMTS, RRC messages for LTE, and/or RRC messages for NR (e.g., over a control plane). QoE configuration may be received using the Service Access Information present in the Media Access Function API. In examples, QoE reporting may be sent back via RRC messages over the control plane or using the Metrics Reporting API defined in Media access function Session handling service of M5 interface. In examples, QoE metrics from an SRC may be XML-formatted and/or JSON-based, as described herein.

QoE metric descriptions may be provided.

QoE metric descriptions and/or a measurement framework may be provided.

An SRC supporting a QoE metrics feature may support reporting of quality metrics as described herein. Metrics may be valid for speech, video, text media, and/or the like. Metrics may be calculated for a (e.g., each) measurement resolution interval (e.g., measureintervel). Metrics may be reported to a metrics reporting server based on (e.g., according to) a measurement reporting interval (e.g., reportinginterval). In addition to and/or alternatively, metrics may be reported after the end of a session.

A PoseToRenderToPhoton metric may be provided.

A PoseToRenderToPhoton duration, M, may be a time duration between a time at which pose information is available from an XR runtime to a renderer and/or a display time of a rendered frame. The unit of a PoseToRenderToPhoton metric may be expressed in milli seconds.

An average pose to render to photon may be equal to the sum of PoseToRenderToPhoton duration of a (e.g., each) frame during a measurement resolution period divided by a time duration (e.g., in seconds), of a measurement resolution period. The unit of a PoseToRenderToPhoton metric may be expressed in milli seconds and/or can be a fractional value.

A minimum pose to render to photon duration may be equal to a value (e.g., a lowest value) of a PoseToRenderToPhoton duration measured during a measurement resolution period. The unit of a PoseToRenderToPhoton metric may be expressed in milli seconds and/or may be an integer value.

A maximum pose to render to photon duration may be equal to a value (e.g., the highest value) of PoseToRenderToPhoton duration measured during a measurement resolution period. The unit of a maximum pose to render to photon metric may be expressed in milli seconds and/or may be an integer value.

Example syntax for a PoseToRenderToPhoton metric may be provided in Table 2 herein.

**Table 2: Example Pose to Render to Photon metric information for Quality Reporting**

| **Key** | | **Type** | **Description** |
|---|---|---|---|
| PoseToRenderToPhoton | | Object | |
| | avgPoseToRenderTo Photon | doubleVectorType | An unordered list of all average pose to render to photon delay measured within each measurement resolution period. |
| | MinPoseToRenderTo Photon | unsignedlntVectorType | The minimum pose to render to photon duration is equal to the lowest value of PoseToRenderToPhoton duration measured during each measurement resolution period. |
| | | | Provides an unordered list of minimum pose to render to photon delay measured during a metric reporting period. |
| | MaxPoseToRenderT oPhoton | unsignedlntVectorType | The maximum pose to render to photon duration is equal to the highest value of PoseToRenderToPhoton duration measured during each measurement resolution period. |
| | | | Provides an unordered list of maximum pose to render to photon delay measured during a metric reporting period. |

A renderToPhoton metric may be provided.

A renderToPhoton duration, M, may be a time duration between a time at which a presentation engine started rendering to a display time of a rendered frame. The unit of a renderToPhoton metric may be expressed in milli seconds.

An average render to photon metric may be equal to the sum of renderToPhoton duration of a (e.g., each) frame during a measurement resolution period divided by a time duration, in seconds, of a measurement resolution period. The unit of an average render to photon metric may be expressed in milli seconds and/or can be a fractional value.

A minimum render to photon duration may be equal to a value (e.g., the lowest value) of renderToPhoton duration measured during a measurement resolution period. The unit of a minimum render to photon duration metric may be expressed in milli seconds and may be an integer value.

A maximum render to photon duration may be equal to a value (e.g., a highest value) of renderToPhoton duration measured during a measurement resolution period. The unit of a maximum render to photon duration metric may be expressed in milli seconds and/or may be an integer value.

Example syntax for a renderToPhoton metric may be described in Table 3.

**Table 3: Example Render to Photon metric information for Quality Reporting**

| **Key** | | **Type** | **Description** |
|---|---|---|---|
| renderToPhoton | | Object | |
| | avgRenderToPhoton | doubleVectorType | An unordered list of all average render to photon delay measured within each measurement resolution period. |
| | MinRenderToPhoton | unsignedlntVectorType | The minimum render to photon duration is equal to the lowest value of renderToPhoton duration measured during each measurement resolution period. |
| | | | Provides an unordered list of minimum render to photon delay measured during a metric reporting period. |
| | MaxRenderToPhoton | unsignedlntVectorType | The maximum render to photon duration is equal to the highest value of renderToPhoton duration measured during each measurement resolution period. |
| | | | Provides an unordered list of maximum render to photon delay measured during a metric reporting period. |

A Round-trip interaction delay metric may be provided.

A roundtrip Interaction Delay duration, M, may be a time duration between a time a user action is initiated to the time an action is presented to the user. The unit of a roundtripInteractionDelay metric may be expressed in milli seconds.

An average round trip interaction delay metric may be equal to the sum of roundtripInteractionDelay duration of an (e.g., each) action during a measurement resolution period divided by a number of actions in a measurement resolution period. The unit of an average round trip interaction delay metric may be expressed in milli seconds and/or can be a fractional value. Within a (e.g., each) resolution period the number of user actions may be summed up and/or stored in a vector (e.g., NumberOflnteractionEvents).

A minimum round trip interaction delay duration may be equal to a value (e.g., the lowest value) of roundtripInteractionDelay duration measured during a measurement resolution period. The unit of a minimum round trip interaction delay duration metric may be expressed in milli seconds and/or may be an integer value.

A maximum round trip interaction delay duration may be equal to a value (e.g., the highest value) of roundtriplnteractionDelay duration measured during a measurement resolution period. The unit of a maximum round trip interaction delay duration metric may be expressed in milli seconds and/or may be an integer value.

Example syntax for a roundtrip Interaction Delay metric may be defined in Table 4.

**Table 4: Example Round-trip interaction delay metric information for Quality Reporting.**

| **Key** | | **Type** | **Description** |
|---|---|---|---|
| roundtripInteractionDelay | | Object | |
| | avgroundtriplnteracti onDelay | doubleVectorType | An unordered list of all average round trip interaction delays measured within each measurement resolution period. |
| | NumberOfUserAction s | unsignedlntVectorType | The number of user actions within each measurement resolution period are summed up and stored in the vector. Provides an unordered list of user actions (occurred within each measurement period) measured during a metric reporting period. |
| | ActionlDs | unsignedlntVectorVectorT ype | An unordered list of user action identifiers within each measurement resolution period stored in the vector. Provides an unordered list of user actions (occurred within each measurement period) measured during a metric reporting period. |
| | Minroundtriplnteracti onDelay | unsignedlntVectorType | The minimum round trip interaction delay duration is equal to the lowest value of roundtrip Interaction Delay duration measured during each measurement resolution period. |
| | | | Provides an unordered list of minimum round trip interaction delay measured during a metric reporting period. |
| | ActionlDs | unsignedlntVectorType | The identifier of an user action with minimum round trip interaction delay within each measurement resolution period. Provides an unordered list of user action identifiers (occurred within each measurement period) with minimum round trip interaction delay measured during a metric reporting period. |
| | MaxroundtripInteracti onDelay | unsignedlntVectorType | The maximum round trip interaction delay duration is equal to the highest value of roundtrip Interaction Delay duration measured during each measurement resolution period. |
| | | | Provides an unordered list of maximum round trip interaction delay measured during a metric reporting period. |
| | ActionlDs | unsignedlntVectorType | The identifier of an user action with maximum round trip interaction delay within each measurement resolution period. Provides an unordered list of user action identifiers (occurred within each measurement period) with maximum round trip interaction delay measured during a metric reporting period. |

A user interaction delay metric may be provided.

A userlnteractionDelay duration, M, may be a time duration between the time a user action is initiated to the time the action is taken account by a content creation engine in a scene manager. The unit of a userlnteractionDelay duration metric may be expressed in milli seconds.

An average user interaction delay metric may be equal to the sum of uselnteractionDelay duration of an (e.g., each) action during a measurement resolution period divided by the number of actions in a measurement resolution period. The unit of an average user interaction delay metric may be expressed in milli seconds and/or may be a fractional value.

A minimum user interaction delay duration may be equal to a value (e.g., the lowest value) of userlnteractionDelay duration measured during a measurement resolution period. The unit of a minimum user interaction delay duration metric may be expressed in milli seconds and/or may be an integer value.

A maximum user interaction delay duration may be equal to the highest value of userlnteractionDelay duration measured during a measurement resolution period. The unit of a maximum user interaction delay duration metric may be expressed in milli seconds and/or may be an integer value.

Example syntax for a userlnteractionDelay metric may be provided in Table 5.

**Table 5: Example user interaction delay metric information for Quality Reporting**

| **Key** | | **Type** | **Description** |
|---|---|---|---|
| userInteractionDelay | | Object | |
| | avguserlnteractionDe lay | doubleVectorType | An unordered list of all average user interaction delays measured within each measurement resolution period. |
| | NumberOfUserAction s | unsignedlntVectorType | The number of user actions within each measurement resolution period are summed up and stored in the vector. Provides an unordered list of user actions (occurred within each measurement period) measured during a metric reporting period. |
| | ActionlDs | unsignedlntVectorType | An unordered list of user action identifiers within each measurement resolution period stored in the vector. Provides an unordered list of user actions (occurred within each measurement period) measured during a metric reporting period. |
| | MinuserlnteractionDe lay | unsignedlntVectorType | The user interaction delay duration is equal to the lowest value of userlnteractionDelay duration measured during each measurement resolution period. |
| | | | Provides an unordered list of user interaction delay measured during a metric reporting period. |
| | ActionlDs | unsignedlntVectorType | The identifier of an user action with minimum round trip interaction delay within each measurement resolution period. Provides an unordered list of user action identifiers (occurred within each measurement period) with minimum round trip interaction delay measured during a metric reporting period. |
| | MaxuserInteractionD elay | unsigned I ntVectorType | The maximum user interaction delay duration is equal to the highest value of userlnteractionDelay duration measured during each measurement resolution period. |
| | | | Provides an unordered list of maximum user interaction delay measured during a metric reporting period. |
| | ActionlDs | unsignedlntVectorType | The identifier of an user action with maximum round trip interaction delay within each measurement resolution period. Provides an unordered list of user action identifiers (occurred within each measurement period) with maximum round trip interaction delay measured during a metric reporting period. |

An age of contents metric may be provided.

An ageOfContent metric, M, may be the time duration between when a time content is created in a scene by a scene manager and the time the content is presented to a user. The unit of an ageOfContent metric may be expressed in milli seconds. Within a (e.g., each) resolution period a number of scene creations and/or updates may be counted and/or stored in a vector (e.g., NumberOfSceneEvents).

The minimum age of content duration may be equal to a value (e.g., the lowest value) of ageOfContent duration measured during a measurement resolution period. The unit of a minimum age of content duration metric may be expressed in milli seconds and/or may be an integer value.

The maximum age of content duration may be equal to a value (e.g., the highest value) of ageOfContent duration measured during a measurement resolution period. The unit of a maximum age of content duration metric may be expressed in milli seconds and/or may be an integer value.

Example syntax for an ageOfContent metric may be provided in defined in Table 6.

**Table 6: Example Age of Content metric information for Quality Reporting**

| **Key** | | **Type** | **Description** |
|---|---|---|---|
| ageOfContent | | Object | |
| | ageOfContent | unsignedlntVectorVectorT ype | An unordered list of all age of content duration metric measured within each measurement resolution period. |
| | NumberOfSceneEve nts | unsigned I ntVectorType | The number of scene creation and/or scene updates within each measurement resolution period are stored in the vector. Provides an unordered list of user actions (occurred within each measurement period) measured during a metric reporting period. |
| | MinAgeOfContent | unsignedlntVectorType | The minimum age of content duration is equal to the lowest value of ageOfContent measured during each measurement resolution period. |
| | | | Provides an unordered list of minimum age of content measured during a metric reporting period. |
| | MaxAgeOfContent | unsignedIntVectorType | The maximum age of content is equal to the highest value of ageOfContent measured during each measurement resolution period. |
| | | | Provides an unordered list of maximum age of content measured during a metric reporting period. |

A Scene update delay metric may be provided.

A sceneUpdateDelay duration, M, may be a time duration spent by a scene manager to update a scene graph. The unit of a sceneUpdateDelay duration metric may be expressed in milliseconds. Within a (e.g., each) resolution period, the number of scene updates may be counted and/or stored in a vector (e.g., NumberOfSceneUpdates).

A minimum scene update delay may be equal to a value (e.g., the lowest value) of sceneUpdateDelay duration measured during a measurement resolution period. The unit of a minimum scene update delay metric may be expressed in milli seconds and/or may be an integer value.

A maximum age of content duration may be equal to a value (e.g., the highest value) of sceneUpdateDelay duration measured during a measurement resolution period. The unit of a maximum age of content duration metric may be expressed in milli seconds and/or may be an integer value.

Example syntax for a sceneUpdateDelay metric may be provided in Table 7.

**Table 7: Example Scene update delay metric information for Quality Reporting:**

| **Key** | | **Type** | **Description** |
|---|---|---|---|
| sceneUpdateDelay | | Object | |
| | sceneUpdateDelay | unsignedIntVectorVectorT ype | An unordered list of all scene update delays measured within each measurement resolution period. |
| | NumberOfSceneupd ates | unsignedIntVectorType | The number of scene updates within each measurement resolution period are stored in the vector. Provides an unordered list of scene updates (occurred within each measurement period) measured during a metric reporting period. |
| | MinSceneUpdateDel ay | unsignedIntVectorType | The minimum scene update delay is equal to the lowest value of sceneUpdateDelay measured during each measurement resolution period. |
| | | | Provides an unordered list of minimum scene update delay duration measured during a metric reporting period. |
| | MaxSceneUpdateDel ay | unsignedIntVectorType | The maximum age of content is equal to the highest value of sceneUpdateDelay measured during each measurement resolution period. |
| | | | Provides an unordered list of maximum scene update delay duration measured during a metric reporting period. |

A metadata delay metric may be provided.

A metadataDelay duration, M, may be the time duration between the time a split rendering metadata is sent from an SRC and the time a split rendering server starts to render using the split rendering metadata. The unit of a metadataDelay duration metric may be expressed in milliseconds.

An average metadata delay metric may be equal to the sum of metadataDelay duration of a (e.g., each) metadata message during a measurement resolution period divided by the number of metadata messages in a measurement resolution period. The unit of an average metadata delay metric may be expressed in milli seconds and/or may be a fractional value. Within a (e.g., each) measurement resolution period the number of metadata messages may be summed up and/or stored in a vector (e.g., NumberOfMetadataMessages).

A minimum metadata delay may be equal to a (e.g., the lowest value) of metadataDelay duration measured during a measurement resolution period. The unit of a minimum metadata delay metric may be expressed in milli seconds and/or may be an integer value.

A maximum metadata delay may be equal to a value (e.g., the highest value) of metadataDelay duration measured during a measurement resolution period. The unit of a maximum metadata delay metric may be expressed in milli seconds and/or may be an integer value.

Example syntax for a metadataDelay metric may be provided in Table 8.

**Table 8: Example Metadata delay metric information for Quality Reporting:**

| **Key** | | **Type** | **Description** |
|---|---|---|---|
| metadataDelay | | Object | |
| | avgmetadataDelay | unsignedIntVectorType | An unordered list of average metadata delays measured within each measurement resolution period. |
| | NumberOfMetadataM essages | unsignedIntVectorType | The number of metadata messages within each measurement resolution period are stored in the vector. Provides an unordered list of metadata messages (occurred within each measurement period) measured during a metric reporting period. |
| | MinMetadaDataDelay | unsignedIntVectorType | The minimum metadata delay is equal to the lowest value of metadataDelay measured during each measurement resolution period. |
| | | | Provides an unordered list of minimum metadata delay duration measured during a metric reporting period. |
| | MaxMetadataDelay | unsignedIntVectorType | The maximum metadata message delay is equal to the highest value of metadataDelay measured during each measurement resolution period. |
| | | | Provides an unordered list of maximum metadata delay duration measured during a metric reporting period. |

A data frames delay metric may be provided.

A dataFrameDelay duration, M, may be a time duration between the time a media rendered frame is transmitted from a split rendering server to the time a split rendering client received the data frame. The unit of a dataFrameDelay duration metric may be expressed in milliseconds.

An average data frame delay metric may be equal to the sum of dataFrameDelay duration of a (e.g., each) transmitted frame during a measurement resolution period divided by the number of frames transmitted in a measurement resolution period. The unit of average data frame delay metric may be expressed in milli seconds and/or may be a fractional value. Within a (e.g., each) measurement resolution period, the number of data frames transmitted may be summed up and/or stored in a vector (e.g., NumberOfDataFrames).

A minimum data frame delay may be equal to a value (e.g., the lowest value) of dataFrameDelay duration measured during a measurement resolution period. The unit of a minimum data frame delay metric may be expressed in milli seconds and/or may be an integer value.

A maximum data frame delay may be equal to a value (e.g., the highest value) of dataFrameDelay duration measured during a measurement resolution period. The unit of a maximum data frame delay metric may be expressed in milli seconds and/or may be an integer value.

Example syntax for a dataFrameDelay metric may be provided in Table 9.

**Table 9: Example Data frame delay metric information for Quality Reporting:**

| **Key** | | **Type** | **Description** |
|---|---|---|---|
| dataFrameDelay | | Object | |
| | avgdataFrameDelay | unsignedIntVectorType | An unordered list of average data frame transmission delays measured within each measurement resolution period. |
| | NumberOfDataFrame s | unsignedIntVectorType | The number of data frames transmitted within each measurement resolution period are stored in the vector. Provides an unordered list of total number of data frames transmitted (within each measurement period) during a metric reporting period. |
| | MinDataFrameDelay | unsignedIntVectorType | The minimum data frame delay is equal to the lowest value of dataFrameDelay measured during each measurement resolution period. |
| | | | Provides an unordered list of minimum data frame delay duration measured during a metric reporting period. |
| | MaxdataFrameDelay | unsignedIntVectorType | The maximum data frame delay is equal to the highest value of dataFrameDelay measured during each measurement resolution period. |
| | | | Provides an unordered list of maximum data frame delay duration measured during a metric reporting period. |

A quality metrics reporting protocol may be provided.

Quality metrics reporting protocol my include for example, an XML-based report format, a JSON report forma, and/or other protocols as described herein.

A reporting protocol may be provided.

In examples, an MIME type of an XML-formatted QoE report may be an application/3gprtc-qoe-report+xml.

In examples, a quality metrics reporting protocol may include a JSON-based report format provided herein.

In examples, an MIME type of a JSON-formatted QoE report may be "application/3gprtc-qoe-report+json".

An XML example Report Format may be provided herein.

A QoE report may be formatted as an XML document. The QoE report may be based on an example XML schema as illustrated in Table 10.
Table 10: Example QoE Report XML schema:

| |
|---|
| ```
 <?xml version="1.0"?>
 <xs:schema xmlns:xs="http://www.w3.org/2001/XMLSchema"
 targetNamespace="urn:3gpp:metadata:2023:RTC:receptionreport"
     xmlns:sv="urn:3gpp:metadata:2016:PSS:schemaVersion"
      xmlns="urn:3gpp:metadata:2023:RTC:receptionreport"
 elementFormDefault="qualified">
      <xs:element name="ReceptionReport"
 type="ReceptionReportType"/>
      <xs:complexType name="ReceptionReportType">
            <xs:choice>
                  <xs:element name="QoeReport" type="QoeReportType"
 minOccurs="0" maxOccurs="unbounded"/>
                  <xs:any namespace="##other" processContents="skip"
 minOccurs="0" maxOccurs="unbounded"/>
            </xs:choice>
            <xs:attribute name="contentURI" type="xs:anyURI"
 use="required"/>
            <xs:attribute name="clientID" type="xs:string"
 use="optional"/>
      </xs:complexType>
      <xs:complexType name="QoeReportType">
            <xs:sequence>
                  <xs:element name="QoeMetric" type="QoeMetricType"
 minOccurs="1" maxOccurs="unbounded"/>
                  <xs:any namespace="##other" processContents="skip"
 minOccurs="0" maxOccurs="unbounded"/>
            </xs:sequence>
            <xs:attribute name="periodID" type="xs:string"
 use="required"/>
            <xs:attribute name="reportTime" type="xs:dateTime"
 use="required"/>
            <xs:attribute name="reportPeriod" type="xs:unsignedInt"
 use="required"/>
            <xs:attribute name="mediaid" type="xs:unsignedInt"
 use="optional"/>
            <xs:attribute name="qoeReferenceId" type="xs:hexBinary"
 use="optional"/>
            <xs:attribute name="recordingSessionId"
 type="xs:hexBinary" use="optional"/>
            <xs:anyAttribute processContents="skip"/>
      </xs:complexType>
      <xs:complexType name="QoeMetricType">
            <xs:choice>
                  <xs:element name="CorruptionDuration"
 type="CurruptionDurationType"/>
                  <xs:element name="SuccessiveLoss"
 type="SuccessiveLossType" />
                  <xs:element name="framerate"
 type="doubleVectorType"/>
                  <xs:element name="JitterDuration" type="
 JitterDurationType"/>
                  <xs:element name="Syncloss" type=" SynclossType"/>
                  <xs:element name="RoundtripDuration"
 type="RoundtripDurationType"/>
                  <xs:element name="AverageBitrate"
 type="AverageBitrateType"/>
                  <xs:element name="poseToRenderToPhoton"
 type="PoseToRenderToPhotonType"/>
                  <xs:element name="renderToPhoton"
 type="RenderToPhotonDurationType"/>
                  <xs:element name="roundtripInteractionDelay"
 type="RoundTripInteractionDelayType"/>
                  <xs:element name="userInteractionDelay"
 type="UserInteractionDelayType"/>
                  <xs:element name="ageOfContent"
 type="AgeOfContentType"/>
                  <xs:element name="sceneUpdateDelay"
 type="SceneUpdateDelayType"/>
                  <xs:element name="metadataDelay"
 type="MetadataDelayType"/>
                  <xs:element name="dataFrameDelay"
 type="DataFrameDelayType"/>
             </xs:choice>
             <xs:anyAttribute processContents="skip"/>
       </xs:complexType>
       <xs:complexType name="CurruptionDurationType">
             <xs:attribute name="totalCorruptionDuration"
 type="unsignedLongVectorType" use="required"/>
             <xs:attribute name="numberOfCorruptionEvents"
 type="unsignedLongVectorType" use="required"/>
             <xs:anyAttribute processContents="skip"/>
       </xs:complexType>
       <xs:complexType name="SuccessiveLossType">
             <xs:attribute name="TotalNumberofSuccessivePacketLoss"
 type="unsignedLongVectorType" use="required"/>
            <xs:attribute name="NumberOfSuccessiveLossEvents"
 type="unsignedLongVectorType" use="required"/>
            <xs:attribute name="NumberOfReceivedPackets"
 type="unsignedLongVectorType" use="required"/>
            <xs:anyAttribute processContents="skip"/>
      </xs:complexType>
      <xs:complexType name="JitterDurationType">
            <xs:attribute name="TotalJitterDuration"
 type="doubleVectorType" use="required"/>
            <xs:attribute name="NumberOfJitterEvents"
 type="unsignedLongVectorType" use="required"/>
            <xs:anyAttribute processContents="skip"/>
      </xs:complexType>
      <xs:complexType name="SynclossDurationType">
            <xs:attribute name="TotalSyncLossDuration"
 type="doubleVectorType" use="required"/>
            <xs:attribute name="NumberOfSyncLossEvents"
 type="unsignedLongVectorType" use="required"/>
            <xs:anyAttribute processContents="skip"/>
      </xs:complexType>
      <xs:complexType name="RoundtripDurationType">
            <xs:attribute name="NetworkRTT"
 type="unsignedLongVectorType" use="required"/>
            <xs:attribute name="InternalRTT"
 type="unsignedLongVectorType" use="required"/>
             <xs:anyAttribute processContents="skip"/>
       </xs:complexType>
       <xs:complexType name=" AverageBitrateType">
             <xs:attribute name="AverageCodecBitrate"
 type="doubleVectorType" use="required"/>
             <xs:anyAttribute processContents="skip"/>
       </xs:complexType>
       <xs:complexType name="poseToRenderToPhotonType">
             <xs:attribute name="avgPoseToRenderToPhoton"
 type="doubleVectorType" use="required"/>
             <xs:attribute name="MinPosetoRenderToPhoton"
 type="unsignedIntVectorType" use="required"/>
            <xs:attribute name="MaxPosetoRenderToPhoton"
 type="unsignedIntVectorType" use="required"/>
            <xs:anyAttribute processContents="skip"/>
       </xs:complexType>
      <xs:complexType name="renderToPhotonType">
            <xs:attribute name="avgPoseToRenderToPhoton"
 type="doubleVectorType" use="required"/>
            <xs:attribute name="MinRenderToPhoton"
 type="unsignedIntVectorType" use="required"/>
            <xs:attribute name="MaxRenderToPhoton"
 type="unsignedIntVectorType" use="required"/>
            <xs:anyAttribute processContents="skip"/>
      </xs:complexType>
      <xs:complexType name="roundtripInteractionDelayType">
            <xs:attribute name="avgroundtripInteractionDelay"
 type="doubleVectorType" use="required"/>
            <xs:attribute name="NumberOfUserActions"
 type="unsignedIntVectorType" use="required"/>
            <xs:attribute name="ActionIds"
 type="unsignedIntVectorVectorType" use="required"/>
            <xs:attribute name="MinroundtripInteractionDelay"
 type="unsignedIntVectorType" use="required"/>
            <xs:attribute name="ActionIds"
 type="unsignedIntVectorType" use="required"/>
             <xs:attribute name="MaxroundtripInteractionDelay"
 type="unsignedIntVectorType" use="required"/>
             <xs:attribute name="ActionIds"
 type="unsignedIntVectorType" use="required"/>
             <xs:anyAttribute processContents="skip"/>
       </xs:complexType>
       <xs:complexType name="userInteractionDelayType">
             <xs:attribute name="avgUserInetractionDelay"
 type="doubleVectorType" use="required"/>
             <xs:attribute name="NumberOfUserActions"
 type="unsignedIntVectorType" use="required"/>
             <xs:attribute name="ActionIds"
 type="unsignedIntVectorVectorType" use="required"/>
            <xs:attribute name="MinUserInetractionDelay"
 type="unsignedIntVectorType" use="required"/>
            <xs:attribute name="ActionIds"
 type="unsignedIntVectorType" use="required"/>
            <xs:attribute name="MaxUser!netractionDelay"
 type="unsignedIntVectorType" use="required"/>
            <xs:attribute name="ActionIds"
 type="unsignedIntVectorType" use="required"/>
            <xs:anyAttribute processContents="skip"/>
      </xs:complexType>
      <xs:complexType name="ageOfContentType">
            <xs:attribute name="ageOfContent"
 type="UnsignedIntVectorVectorType" use="required"/>
            <xs:attribute name="NumberOfSceneEvents"
 type="unsignedIntVectorType" use="required"/>
            <xs:attribute name="MinageOfContent"
 type="unsignedIntVectorType" use="required"/>
            <xs:attribute name="MaxAgeOfContent"
 type="unsignedIntVectorType" use="required"/>ss
            <xs:anyAttribute processContents="skip"/>
      </xs:complexType>
      <xs:complexType name="sceneUpdateDelayType">
            <xs:attribute name="sceneUpdateDelay"
 type="UnsignedIntVectorVectorType" use="required"/>
            <xs:attribute name="NumberOfSceneUpdates"
 type="unsignedIntVectorType" use="required"/>
            <xs:attribute name="MinsceneUpdateDelay"
 type="unsignedIntVectorType" use="required"/>
            <xs:attribute name="MaxsceneUpdateDelay"
 type="unsignedIntVectorType" use="required"/>ss
            <xs:anyAttribute processContents="skip"/>
      </xs:complexType>
      <xs:complexType name="metadateDelayType">
            <xs:attribute name="avgmetadataDelay"
 type="unsignedIntVectorType" use="required"/>
            <xs:attribute name="NumberOfMetadataMessages"
 type="unsignedIntVectorType" use="required"/>
            <xs:attribute name="MinMetadataDelay"
 type="unsignedIntVectorType" use="required"/>
            <xs:attribute name="MaxMetadataDelay"
 type="unsignedIntVectorType" use="required"/>ss
            <xs:anyAttribute processContents="skip"/>
      </xs:complexType>
 <xs:complexType name="dateFrameDelayType">
            <xs:attribute name="avgdataFrameDelay"
 type="unsignedIntVectorType" use="required"/>
            <xs:attribute name="NumberOfDataFrames"
 type="unsignedIntVectorType" use="required"/>
            <xs:attribute name="MinDataFrameDelay"
 type="unsignedIntVectorType" use="required"/>
            <xs:attribute name="MaxDataFrameDelay"
 type="unsignedIntVectorType" use="required"/>ss
            <xs:anyAttribute processContents="skip"/>
      </xs:complexType>
      <xs:simpleType name="UnsignedIntVectorVectorType">
            <xs:list itemType="UnsignedIntVectorType"/>
      </xs:simpleType>
      <xs:simpleType name="unsignedLongVectorType">
            <xs:list itemType="xs:unsignedLong"/>
     </xs:simpleType>
     <xs:simpleType name="doubleVectorType">
            <xs:list itemType="xs:double"/>
     </xs:simpleType>
      <xs:simpleType name="StringVectorType">
            <xs:list itemType="xs:string"/>
      </xs:simpleType>
      <xs:simpleType name="UnsignedIntVectorType">
            <xs:list itemType="xs:unsignedInt"/>
      </xs:simpleType>
 </xs:schema>
``` |

An example JSON Report Format may be provided.

A QoE report may be formatted as a JSON document. The QoE report may be based on an example JSON schema as illustrated in Table 11.

Table 11: Example QoE Report JSON schema:

| |
|---|
| ```
{
       "$schema" : "http://json-schema.org/draft-07/schema",
       "title" : "PoseToRenderToPhoton",
       "type" : "object",
       "description": "report for pose to render to photon
 metric",
       "properties" : {
             "avgPoseToRenderToPhoton": {
                   "type": "array",
                   "description": "array of average pose to render to
 photon durations measured in each measurement resolution
 period",
                   "items": {
                         "type": "double"
                   },
             },
             "MinPoseToRenderToPhoton": {
                   "type": "array",
                   "description": "array of minimum pose to render to
 photon durations measured in each measurement resolution
 period",
                   "items": {
                         "type": "integer" }, },
             "MaxPoseToRenderToPhoton": {
                   "type": "array",
                   "description": "array of maximum pose to render to
 photon durations measured in each measurement resolution
 period",
                   "items": {
                         "type": "integer" }, },
             "extensions": {},
             "extras": { } },
       "required": ["avgposeToRenderToPhoton",
 "MinPoseToRenderToPhoton", "MaxPoseToRenderToPhoton"] }
 {
       "$schema" : "http://json-schema.org/draft-07/schema",
       "title" : "RenderToPhoton",
       "type" : "object",
       "description": "report for render to photon metric",
       "properties" : {
             "avgRenderToPhoton": {
                   "type": "array"
                   "description": "array of average render to photon
 durations measured in each measurement resolution period",
                   "items": {
                         "type": "double"
                   },
             },
             "MinRenderToPhoton": {
                   "type": "array"
                   "description": "array of minimum render to photon
 durations measured in each measurement resolution period",
                   "items": {
                         "type": "integer" }, },
             "MaxRenderToPhoton": {
                   "type": "array"
                   "description": "array of maximum render to photon
 durations measured in each measurement resolution period",
                   "items": {
                         "type": "integer" }, },
             "extensions": { },
             "extras": { } },
       "required": ["avgRenderToPhoton", "MinRenderToPhoton",
 "MaxRenderToPhoton"]
 }
 {
       "$schema" : "http://json-schema.org/draft-07/schema",
       "title" : "RondtripInteractionDelay",
       "type" : "object",
       "description": "report for roundtrip interaction delay
 metric",
       "properties" : {
             "avgroundtripInteractionDelay": {
                   "type": "array"
                   "description": "array of average roundtrip
 interaction delays measured in each measurement resolution
 period",
                   "items": {
                         "type": "double"
                   },
             },
             "NumberOfUserActions": {
                   "type": "array"
                   "description": "array of the total number of user
 actions within each measurement resolution period",
                   "items": {
                         "type": "integer" },
             "ActionIDs": {
                   "type": "array"
                   "description": "array of the user action
 identifiers within reporting period"
                   "items": {
                         "type": "array"
                         "description": "array of the total user action
 identifiers within each measurement resolution period",
                          "items": {
                                "type": "integer" } }, },
             "MinroundtripInteractionDelay": {
                   "type": "array",
                   "description": "array of minimum roundtrip
 interaction delays measured in each measurement resolution
 period",
                   "items": {
                         "type": "integer" }, },
             "ActionIDs": {
                   "type": "array"
                   "description": "array of identifiers of the user
 actions with minimum roundtrip interaction delay within
 reporting period",
                   "items": {
                         "type": "integer" }, },
             "MaxroundtripInteractionDelay": {
                   "type": "array"
                   "description": "array of maximum roundtrip
 interaction delays measured in each measurement resolution
 period",
                   "items": {
                         "type": "integer" }, },
             "ActionIDs": {
                   "type": "array"
                   "description": "array of identifiers of the user
 actions with maximum roundtrip interaction delay within
 reporting period",
                   "items": {
                         "type": "integer" }, },
             "extensions": {},
             "extras": {}
       },
       "required": ["avgroundtripInteractionDelay",
 "NumberOfUserActions", "MinroundtripInteractionDelay",
 "MaxroundtripInteractionDelay"]
 }
 {
       "$schema" : "http://json-schema.org/draft-07/schema",
       "title" : "userInteractionDelay",
       "type" : "object",
       "description": "report for user interaction delay metric",
       "properties" : {
             "userInteractionDelay": {
                   "type": "array"
                   "description": "array of average user interaction
 delays measured in each measurement resolution period",
                   "items": {
                         "type": "double"
                   },
             },
             "NumberOfUserActions": {
                   "type": "array"
                   "description": "array of the total number of user
 actions within each measurement resolution period",
                   "items": {
                         "type": "integer" },
             "ActionIDs": {
                   "type": "array"
                   "description": "array of the user action
 identifiers within reporting period"
                   "items": {
                         "type": "array"
                         "description": "array of the user action
 identifiers within each measurement resolution period",
                          "items": {
                                "type": "integer" }
                   },
              },
             "MinuserInteractionDelay": {
                   "type": "array",
                   "description": "array of minimum user interaction
 delays measured in each measurement resolution period",
                   "items": {
                         "type": "integer" }, },
             "ActionIDs": {
                   "type": "array",
                   "description": "array of identifiers of the user
 actions with minimum user interaction delay within reporting
 period",
                   "items": {
                         "type": "integer" }, },
             "MaxuserInteractionDelay": {
                   "type": "array"
                   "description": "array of maximum user interaction
 delays measured in each measurement resolution period",
                   "items": {
                         "type": "integer" }, },
             "ActionIDs": {
                   "type": "array"
                   "description": "array of identifiers of the user
 actions with maximum user interaction delay within reporting
 period",
                   "items": {
                         "type": "integer" }, },
             "extensions": {},
             "extras": {}
       },
       "required": ["avguserInteractionDelay",
 "NumberOfUserActions", "MinuserInteractionDelay",
 "MaxuserInteractionDelay"]
 }
 {
       "$schema" : "http://json-schema.org/draft-07/schema",
       "title" : "ageOfContent",
       "type" : "object",
       "description": "report for age of content metric",
       "properties" : {
             "ageOfContent": {
                   "type": "array"
                   "description": "array of age of content duration
 measured in reporting period",
                   "items": {
                         "type": "array"
                         "description": "array of the age content
 duration measured within each measurement resolution period",
                          "items": {
                                "type": "integer" } }, },
             "NumberOfSceneEvents": {
                   "type": "array",
                   "description": "array of the total number of scene
 creation or scene updates within each measurement resolution
 period",
                   "items": {
                         "type": "integer"
                   },
             "MinAgeOfContent": {
                   "type": "array",
                   "description": "array of minimum age of content
 duration measured in each measurement resolution period",
                   "items": {
                         "type": "integer" }, },
             "MaxAgeOfContent": {
                   "type": "array",
                   "description": "array of maximum age of content
 duration measured in each measurement resolution period",
                   "items": {
                         "type": "integer" }, },
             "extensions": {},
             "extras": {}
       "required": ["ageOfContent", "NumberOfSceneEvents",
 MinAgeOfContent", "MaxAgeOfContent"]
 } {
       "$schema" : "http://json-schema.org/draft-07/schema",
       "title" : "sceneUpdateDelay",
       "type" : "object",
       "description": "report for scene update delay metric",
       "properties" : {
             "sceneUpdateDelay": {
                   "type": "array",
                   "description": "array of scene update delay
 duration measured in a reporting period",
                   "items": {
                         "type": "array",
                         "description": "array of the scene update delay
 duration measured within each measurement resolution period",
                          "items": {
                                "type": "integer"
                   }
             }, },
             "NumberOfSceneUpdates": {
                   "type": "array",
                   "description": "array of the total number of scene
 updates within each measurement resolution period",
                   "items": {
                         "type": "integer" },
             "MinSceneUpdateDelay": {
                   "type": "array",
                   "description": "array of minimum scene update delay
 durations measured in each measurement resolution period",
                   "items": {
                         "type": "integer" }, },
             "MaxSceneUpdateDelay": {
                   "type": "array",
                   "description": "array of maximum scene update delay
 durations measured in each measurement resolution period",
                   "items": {
                         "type": "integer" },
             },
             "extensions": {},
             "extras": {}
       },
       "required": [" scene Update Delay" , "NumberOfSceneEvents",
 MinSceneUpdateDelay", "MaxSceneUpdateDelay"]
 }
 {
       "$schema" : "http://json-schema.org/draft-07/schema",
       "title" : "metadataDelay",
       "type" : "object",
       "description": "report for metdata delay metric",
       "properties" : {
             "avgMetadataDelay": {
                   "type": "array",
                   "description": "array of average metadata delay
 duration measured in each measurement resolution period"
                   "items": {
                         "type": "integer" }, },
             "NumberOfMetadataMessages": {
                   "type": "array",
                   "description": "array of the total number of
 metadata messages within each measurement resolution period",
                   "items": {
                         "type": "integer" },
             "MinmetadataDelay": {
                   "type": "array",
                   "description": "array of minimum metadata delay
 durations measured in each measurement resolution period"
                   "items": {
                         "type": "integer" }, },
             "MaxmetadataDelay": {
                   "type": "array",
                   "description": "array of maximum matadata delay
 durations measured in each measurement resolution period"
                   "items": {
                         "type": "integer" },
             },
             "extensions": {},
             "extras": {}
       },
       "required": ["avgmetadataDelay", "NumberOfMeadataRequests",
 MinMetadataDelay", "MaxMetadataDelay"]
 }
 {
       "$schema" : "http://json-schema.org/draft-07/schema",
       "title" : "dataFrameDelay",
       "type" : "object",
       "description": "report for data frame delay metric",
       "properties" : {
             "avgdataFrameDelay": {
                   "type": "array",
                   "description": "array of average data frame
 transmission delay duration measured in each measurement
 resolution period",
                   "items": {
                         "type": "integer" }, },
             "NumberOfDataFrames": {
                   "type": "array",
                   "description": "array of the total number of data
 frames transmitted within each measurement resolution period",
                   "items": {
                         "type": "integer" },
             "MinDataFrameDelay": {
                   "type": "array",
                   "description": "array of minimum data frame delay
 durations measured in each measurement resolution period",
                   "items": {
                         "type": "integer" }, },
             "MaxDataFrameDelay": {
                   "type": "array",
                   "description": "array of maximum data frame delay
 durations measured in each measurement resolution period",
                   "items": {
                         "type": "integer" },
             },
             "extensions": {},
             "extras": {}
       },
       "required": ["avgdataFrameDelay", "NumberOfDataFrame",
 MindataFrameDelay", "MaxdataFrameDelay"]
 }
``` |

One or more reporting protocols may be provided herein.

Split-rendering media services may provide MIME content type and/or a metrics report format (e.g., for a 3GPP urn:3GPP:ns:PSS:RTC:QM1 metrics reporting scheme).

For configurations performed via QMC functionality, a client may send a QoE report via the QMC functionality. For OMA-DM configuration, when/if a specific metrics server has been configured, a client may send a QoE report using one or more protocols described herein (e.g., a HTTP (e.g., RFC 9110) POST request carrying XML formatted data or JSON-formatted data in its body).

An example QoE report using an HTTP POST request carrying XML-formatted QoE metrics data may be provided below in Table 12. Table 12: Example QoE Report using an HTTP POST Format:

| |
|---|
| ```
 POST http://www.exampleserver.com HTTP/1.1
 Host: 192.68.1.1
 User-Agent: Mozilla/4.0 (compatible; MSIE 8.0; Windows NT 6.1;
 Trident/4.0)
 Content-Type: text/xml; charset=utf-8
 Content-Length: 440
 <?xml version="1.0"?>
 <ReceptionReport
 contentURI="http://www.example.com/content/content.sdp"
 clientID="35848574673"
 xmlns="urn:3gpp:metadata:2023:RTC:receptionreport"
     xsi:schemaLocation="urn:3gpp:metadata:2023:RTC:receptionrepo
 rt RTC-QoE-Report.xsd"
      xmlns:xsi="http://www.w3.org/2001/XMLSchema-instance">
      <QoeReport periodID="Period1" reportTime="2011-02-
 16T09:00:00" reportPeriod="500">
            <QoeMetric>
                  <CorruptionDuration> totalCorruptionDuration="480 0
 120"
                   numberOfCorruptionEvents="5 0
 2"</CorruptionDuration>
            </QoeMetric>
            <QoeMetric> framerate="28.0 30.0 29.8"</framerate>
            </QoeMetric>
            <QoeMetric>
                  <JitterDuration> TotalJitterDuration="0 0.346 0"
                   NumberOfJitterEvents="0 1 0"</JitterDuration>
            </QoeMetric>
      </QoeReport>
      <QoeReport periodID="Period2" reportTime="2011-02-
 16T09:08:20" reportPeriod="500">
            <QoeMetric>
                  <CorruptionDuration> totalCorruptionDuration="83 0
 0"
                   numberOfCorruptionEvents="1 0
 0"</CorruptionDuration>
            </QoeMetric>
            <QoeMetric>
                  <JitterDuration> TotalJitterDuration="0 0 0"
                   NumberOfJitterEvents="0 0 0"</JitterDuration>
            </QoeMetric>
            <QoeMetric>
                  <poseToRenderToPhoton> avgPoseToRenderToPhoton="10
 12 13"
                   MinPoseToRenderToPhoton="7 8 9"
                   MaxPoseToRenderToPhoton="13 14
 16"</poseToRenderToPhoton>
            </QoeMetric>
            <QoeMetric>
                  <roundTripInteractionDelay>
 avdroundtripInteractionDelay="12 14 16"
                   NumberOfUserInterActions="4 5 3"
                   MinroundtripInteractionDelay="10 12 14"
                   MaxroundtripInteractionDelay="15 17
 18"</roundTripInteractionDelay>
            </QoeMetric>
      </QoeReport>
 </ReceptionReport>
``` |

A quality reporting scheme for a split-rendering client may be provided.

In examples, SRC may use a one or more metrics reporting schemes (e.g., based on TS 26.113 clause 6.7). In examples, a URN may be used for one or more metrics reporting schemes (e.g., a Scheme@schemeIdUri may be urn:3GPP:ns:PSS:RTC:QM1). A metrics reporting provisioning API may allow an RTC application provider to configure a metrics collection and/or a reporting procedure for a (e.g., particular) split rendering session (e.g., at reference point RTC-1 of FIGS. 8 and/or 9).

A metrics reporting configuration for a split-rendering client may be provided.

A split-rendering client (e.g., as provided in 3GPP TS 26.565) may use a data model for metrics reporting provisioning API (e.g., as provided in clause 8.10.3.1 of 3GPP TS 26.510). A split-rendering client (e.g., as provided in 3GPP TS 26.565) may use a data model for service access information API (e.g., as provided in clause 9.2.3.1 of 3GPP TS 26.510). In examples, a metrics element (e.g., present) in a MetricsReportingConfiguration resource (e.g., as provided in clause 8.10.3 of 3GPP TS 26.510) and/or ServiceAccessInformation resource (e.g., as provided in clause 9.2.3 of 3GPP TS 26.510) may include zero and/or more metrics (e.g., based on one or more QoE metrics described herein and/or one or more quality metrics as provided in clause 15.2 of 3GPP TS 26.113). In examples, a metrics element may include at least one of a poseToRenderToPhoton metric, a renderToPhoton, a roundtriplnteractionDelay, a userlnteractionDelay, ageOfContent, a sceneUpdateDelay, a metadataDelay, a dataFrameDelay, and/or the like.

When/if a figure is presented as a flow diagram, it may be understood that it also provides a block diagram of a corresponding apparatus. Similarly, when a figure is presented as a block diagram, it may be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain examples the encoder signals a particular one of a plurality of parameters for region-based filter parameter selection for de-artifact filtering. In this way, in an example the same parameter is used at both the encoder side and the decoder side. Thus, for example, an encoder can transmit (explicit signaling) a particular parameter to the decoder so that the decoder can use the same particular parameter. Moreover, if the decoder already has the particular parameter as well as others, then signaling can be used without transmitting (implicit signaling) to simply allow the decoder to know and select the particular parameter. By avoiding transmission of any actual functions, a bit savings is realized in various examples. It is to be appreciated that signaling can be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described example. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of examples. Features of these examples can be provided alone or in any combination, across various claim categories and types. Further, examples can include one or more of the following features, devices, or aspects, alone or in any combination, across various claim categories and types:

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A split-rendering client (SRC) device comprising a processor configured to at least:
receive a metrics reporting configuration information, wherein the metrics reporting configuration information indicates at least a reporting scheme to be used by the SRC device for reporting split rendering metrics associated with a split-rendering session, a measurement resolution interval, and a reporting interval;
receive a trigger indicating start of a metrics reporting session associated with a streaming session;
measure a set of quality of experience (QoE) metrics associated with the streaming session, wherein the set of QoE metrics are measured for the measurement resolution interval, wherein the set of QoE metrics comprises at least one of a pose to render to photon metric, a render to photon metric, a round-trip interaction delay metric, a user interaction delay metric, an age of contents metric, a scene update delay metric, a metadata delay metric, or a data frames delay metric; and
send the set of QoE metrics to a metrics reporting server, wherein the QoE metrics are sent based on the reporting interval.

2. The SRC device of claim 1, wherein the QoE metrics reporting configuration information is received using one of a radio resource control (RRC) message, a QoE measurement collection (QMC) functionality, an M5 interface, or an open mobile alliance (OMA) device management (DM) configuration.

3. The SRC device of claim 1, wherein the set of metrics comprises QoE metrics and latency metrics.

4. The SRC device of claim 1, wherein the trigger is received from a service access information object in a media access function session handling service and a metrics reporting configuration object in a media access function provisioning service.

5. The SRC device of claim 1, wherein the trigger is an open mobile alliance (OMA) device management (DM) QoE management object.

6. The SRC device of claim 1, wherein the trigger is received using QoE measurement collection (QMC) functionality.

7. The SRC device of claim 1, wherein the set of QoE metrics are sent via a Metrics reporting API, an RRC message, or QoE measurement collection (QMC) functionality.

8. The SRC device of claim 1, wherein the set of QoE metrics is sent via a hypertext transfer protocol (HTTP) POST request, wherein the HTTP POST request comprises the set of QoE metrics in XML format or JSON format.

9. The SRC device of claim 1, wherein the set of QoE metrics are sent using QMC functionality.

10. The SRC device of claim 1, wherein the pose to render to photon metric comprises at least a list of pose to render to photon delays measured during the measurement resolution interval, wherein the render to photon metric comprises at least a list of average render to photon delays measured during the measurement resolution interval, wherein the round-trip interaction delay metric comprises at least an average round trip interaction delay measured during the measurement resolution interval, wherein the user interaction delay metric comprises at least an average user interaction delays measured during the measurement resolution interval, wherein the age of contents metric comprises at least a list of age of content duration metrics measured during the measurement resolution interval, wherein the scene update delay metric comprises at least a list of scene update delays measured during the measurement resolution interval, wherein the metadata delay metric comprises at least a list of average metadata delays measured during the measurement resolution interval, wherein the data frames delay metric comprises at least a list of average data frame transmission delays measured during the measurement resolution interval.

11. A method performed by a split-rendering client (SRC) device and comprising:
receiving a metrics reporting configuration information, wherein the metrics reporting configuration information indicates at least a reporting scheme to be used by the SRC device for reporting split rendering metrics associated with a split-rendering session, a measurement resolution interval, and a reporting interval;
receiving a trigger indicating start of a metrics reporting session associated with a streaming session;
measuring a set of quality of experience (QoE) metrics associated with the streaming session, wherein the set of QoE metrics are measured for the measurement resolution interval, wherein the set of QoE metrics comprises at least one of a pose to render to photon metric, a render to photon metric, a round-trip interaction delay metric, a user interaction delay metric, an age of contents metric, a scene update delay metric, a metadata delay metric, or a data frames delay metric; and
sending the set of QoE metrics to a metrics reporting server, wherein the QoE metrics are sent based on the reporting interval.

12. The method of claim 11, wherein the QoE metrics reporting configuration information is received using one of a radio resource control (RRC) message, a QoE measurement collection (QMC) functionality, an M5 interface, or an open mobile alliance (OMA) device management (DM) configuration.

13. The method of claim 11, wherein the set of metrics comprises QoE metrics and latency metrics.

14. The method of claim 11, wherein the trigger is received from a service access information object in a media access function session handling service and a metrics reporting configuration object in a media access function provisioning service.

15. The method of claim 11, wherein the trigger is an open mobile alliance (OMA) device management (DM) QoE management object.
